Europäisches Patentamt

European Patent Office

Office européen des brevets

(11) Veröffentlichungsnummer: **0 177 093**
**A2**

# (12) EUROPÄISCHE PATENTANMELDUNG

(21) Anmeldenummer: **85201508.0**

(22) Anmeldetag: **20.09.85**

(51) Int. Cl.⁴: **G 06 K 15/12**

(30) Priorität: **27.09.84 DE 3435425**

(43) Veröffentlichungstag der Anmeldung:
**09.04.86 Patentblatt 86/15**

(84) Benannte Vertragsstaaten:
**DE FR GB IT**

(71) Anmelder: **Philips Patentverwaltung GmbH
Billstrasse 80
D-2000 Hamburg 28(DE)**

(84) Benannte Vertragsstaaten:
**DE**

(71) Anmelder: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Hill, Bernhard, Dr.-Ing.
Bäckerstrasse 57
D-5100 Aachen-Brand(DE)**

(72) Erfinder: **Schmidt, Klaus-Peter
Rathausstieg 33
D-2085 Quickborn(DE)**

(74) Vertreter: **Koch, Ingo et al,
Philips Patentverwaltung GmbH Billstrasse 80 Postfach
105149
D-2000 Hamburg 28(DE)**

(54) **Magnetooptischer Druckkopf.**

(57) Magnetooptischer Druckkopf mit einer Lichtquelle, einer zwischen dieser und einem lichtempfindlichen Aufzeichnungsträger angeordneten Lichtschaltmaske mit Lichtschaltelementen und mit einem Abbildungssystem zur Abbildung einer Reihe von von den Lichtschaltelementen gebildeten Lichtpunkten auf einem lichtempfindlichen Aufzeichnungsträger, wobei eine einzige monolithische integrierte Lichtschaltmaske mit matrixförmig auf einem Substrat ausgebildeten Lichtschaltelementen für die Bildung einer Lichtpunktzeile für die Breite einer Schreibseite vom Format DIN A4 vorgesehen ist sowie ein Abbildungssystem in Form von einzelnen, fliegend angeordneten Lichtleitfasern, die an ihrem Lichteintrittsende mit den Lichtschaltelementen optisch verbunden sind und deren Lichtaustrittsenden linienförmig nebeneinander in äquidistanten Abständen angeordnet sind.

Fig.2

Magnetooptischer Druckkopf          **0177093**

Die Erfindung bezieht sich auf einen magnetooptischen Druckkopf mit einer Lichtquelle, einer zwischen dieser und einem lichtempfindlichen Aufzeichnungsträger angeordneten Lichtschaltmaske mit Lichtschaltelementen und mit einem Abbildungssystem zur Abbildung einer Reihe von von den Lichtschaltelementen gebildeten Lichtpunkten auf einem lichtempfindlichen Aufzeichnungsträger.

Magnetooptische Druckköpfe für optische Drucker sind bereits bekannt, beispielsweise aus DE-OS 28 12 206, und im Prinzip in Figur 1 dargestellt.

Angewendet werden magnetooptische Druckköpfe in optischen Druckern zur zeilenweisen Belichtung eines optisch empfindlichen Aufzeichnungsträgers oder Zwischenträgers, von dem dann durch z.B. ein photographisches Verfahren oder im Falle der Elektrophotographie durch ein elektrophotographisches Verfahren ein optisches Bild hergestellt wird. Insbesondere elektrophotographische Drucker besitzen eine steigende Bedeutung für die Druck- und Bürotechnik zur Erzeugung von Text oder Graphik hoher Qualität auf Normalpapier.

Grundsätzlich wird bei optischen Druckköpfen eine möglichst hohe Dichte von elektronisch individuell schaltbaren Lichtpunkten angestrebt, um damit die Bildqualität zu erhöhen. Für die Anwendung in elektrophotographischen Druckern werden mindestens 10 Lichtpunkte pro mm angestrebt.

Werden in Festkörpertechnik, wie sie in DE-OS 28 12 206 näher beschrieben ist, hergestellte Lichtschaltelemente bzw. Lichtschaltmasken verwendet, kann die Lichtpunktdichte zwar die erforderliche Größe erreichen, jedoch ist der absoluten Länge einer Lichtschaltzeile eine Grenze durch die Herstellungstechnologie gesetzt. Die oben beschriebenen magnetooptischen Lichtschaltmasken werden mittels einer photolithographischen Maskentechnik hergestellt, derart, daß eine, auf einem Trägersubstrat befindliche Eisengranatschicht so strukturiert wird, daß einzelne Inseln entstehen, die nach Anbringen von Dünnschichtwiderständen und elektrischen Anschlüssen Lichtschaltelemente darstellen. Realisiert sind derzeit Lichtschaltmasken nach dem magnetooptischen Prinzip, die bis zu 512 Lichtschaltelemente integriert auf einem Träger enthalten bei einer Dichte von 16 Schaltelementen pro mm. Für die Belichtung einer Zeile auf einer Papierseite vom Format DIN A4 in einem optischen Drucker ist, bedingt durch die Größe der für die Herstellung der Lichtschaltmasken zur Verfügung stehenden Substrate von maximal einigen cm Durchmesser ein modulartiges Aneinandersetzen von mehreren solcher Lichtschaltmasken mit jeweils einer Zeile von Lichtschaltelementen erforderlich. Durch modulartiges Aneinandersetzen von z.B. 5 Lichtschaltmasken mit jeweils 512 Lichtschaltelementen kann eine durchgehende Lichtpunktreihe von 2560 Lichtpunkten in einem Rasterabstand von 83μm (12 Punkte/mm) erstellt werden, mit der die lichtempfindliche Oberfläche in der Bildebene eines Aufzeichnungsträgers belichtet wird. Die Lichtpunktreihe wird dadurch gebildet, daß die integrierten Lichtschaltelemente mit Hilfe einer linienförmigen Lichtquelle, z.B. einer Leuchtstofflampe oder einer Stabhalogenlampe beleuchtet und thermomagnetisch entweder in den "Hell"- oder "Dunkel"-Zustand geschaltet werden.

Das Grundprinzip einer Lichtschaltmaske besteht darin, daß linear polarisiertes Licht beim Durchlaufen einer dünnen ferromagnetischen und magnetooptischen Granatschicht, z.B. aus Eisengranat, eine Drehung der Schwingungsebene erfährt (Faraday-Drehung). Diese Drehung ändert ihr Vorzeichen, wenn die Richtung der Magnetisierung in der Schicht umgeschaltet wird.

In einer Polarisationsoptik, gebildet aus einer Polarisationsfolie an der Lichteintrittsseite vor der Lichtschaltmaske und einer Analysatorfolie an der Lichtaustrittsseite hinter der Lichtschaltmaske wird die Drehung der Schwingungsebene für die beiden Zustände der Magnetisierungsrichtung in einen Helligkeitsunterschied (Hell-Dunkel) umgewandelt. Die auf der Lichtschaltmaske vorhandenen, aus der dünnen magnetooptischen Granatschicht gebildeten Lichtschaltelemente besitzen eine spontane Magnetisierung, die sich stets senkrecht zur Schichtfläche ausrichtet und damit entweder parallel oder antiparallel zur Hauptflächennormalen der Lichtschaltelemente steht. Das Schalten der Lichtschaltelemente von einem dieser Zustände in den anderen erfolgt thermomagnetisch durch gleichzeitige Einwirkung von aus auf den Lichtschaltelementen angebrachten Dünnschicht-Widerstandselementen selektiv erzeugten Heizimpulsen und eines pauschal über eine Spule angelegten Magnetfeldes.

Das in Transmission entstehende Lichtpunktbild hinter den Lichtschaltmasken wird bei den bekannten Druckköpfen über eine mehrlinsige Optik aus einer Anzahl von Objektiven, die der Anzahl der modulartig aneinander gesetzten Lichtschaltmasken entspricht, auf dem Aufzeichnungsträger leicht vergrößert abgebildet. Bei der Abbildung der über die Lichtschaltelemente erhaltenen Bildpunkte mit einer derartigen Optik muß jedoch berücksichtigt werden, daß der Abstand zwischen den einzelnen Lichtschaltelementen einer Lichtschaltmaske (Gruppe von Lichtschaltelementen) in Zeilenrichtung kleiner ist als derjenige Abstand zweier benachbarter Lichtschaltelemente nebeneinander liegender Lichtschaltmasken. Dies hängt damit zusammen, daß die integrierten Lichtschaltmasken aus größeren Substraten herausgesägt werden müssen und wegen der auftretenden Kantenausbrüche beim Sägen ein Mindestabstand von der Sägekante zu den aktiven Lichtschaltelementen der Zeile notwendig ist, der in der Praxis mehr als der mittlere Abstand der Lichtschaltelemente auf einer der Lichtschaltmasken beträgt. Um gleiche Abstände der abgebildeten Lichtpunkte in der Aufzeichnungsebene entlang der gesamten Zeile zu erhalten, ist es daher erforderlich, jeweils einer der modulartig aneinandergesetzten Lichtschaltmasken mit einer Gruppe von Lichtschaltelementen ein Objektiv zuzuordnen, wobei dieses Objektiv eine vergrößerte Abbildung liefert. Auf diese Weise wird der mittlere Abstand zwischen den Lichtschaltelementen einer Gruppe vergrößert, so daß letztlich die in der Aufzeichnungsebene abgebildeten Lichtpunkte untereinander entlang der gesamten Zeile einen gleichen Abstand aufweisen.

Bei dieser Art der Abbildung ist es somit erforderlich, mit Gruppen von Lichtschaltelementen zu arbeiten, wobei eine von einem Objektiv abgebildete Gruppe jeweils innerhalb der Linsenöffnung angeordnet sein muß. Dies führt zu einer nicht optimalen Belegung der Zeile mit Lichtschaltelementen, so daß auch die Dichte der abgebildeten Lichtpunkte in der Aufzeichnungsebene begrenzt ist. Darüberhinaus müssen bei der genannten Abbildung Linsen benutzt werden, die eine vergrößerte Abbildung liefern, so daß ein gleiches Rastermaß der abgebildeten Lichtpunkte erreicht wird.

Derartige Objektive sind relativ teuer, da es sich bei ihnen um Spezialanfertigungen handelt. Mehrlinsige Objektive stellen also einen nicht unerheblichen Kostenfaktor bei der Herstellung eines magnetooptischen Druckkopfes dar.

Der Erfindung liegt die Aufgabe zugrunde, einen magnetooptischen Druckkopf der eingangs genannten Art so zu verbessern, daß eine Reihe von äquidistanten Lichtpunkten aus dem hinter der Lichtschaltmaske mit Lichtschaltelementen entstehenden Lichtpunktbild in die Bildebene des Aufzeichnungsträgers abgebildet werden kann ohne Zwischenschalten einer vergrößernden, aus mehreren Objektiven bestehenden Optik bei gleichzeitiger Erhöhung der Anzahl der Lichtpunkte pro Lichtpunktreihe.

Diese Aufgabe wird erfindungsgemäß gelöst durch eine monolithische integrierte Lichtschaltmaske mit matrixförmig auf einem Substrat ausgebildeten Lichtschaltelementen und durch ein Abbildungssystem in Form von einzelnen, fliegend angeordneten Lichtleitfasern, die an ihrem Lichteintrittsende mit den Lichtschaltelementen optisch verbunden sind und deren Lichtaustrittsenden linienförmig nebeneinander in äquidistanten Abständen angeordnet sind.

Nach einer vorteilhaften Weiterbildung der Erfindung sind die Lichtschaltelemente durch Strukturieren einer auf einem einkristallinen Substrat angebrachten magnetooptischen Schicht gebildet, wobei auf der Struktur in bekannter Weise Leiterbahnen und Dünnschichtwiderstandselemente aufgedampft sind.

Mit der monolithischen Ausführung der Lichtschaltmaske ist
der Vorteil verbunden, daß auf einem einzigen einkristallinen, mit einer magnetooptischen Schicht versehenen Chip
auf engem Raum die gesamte erforderliche Anzahl von
Schaltelementen zur Bildung einer Lichtpunktzeile für z.B.
die Breite einer DIN A4 Schreibseite untergebracht ist.
Durch die hohe Integration ist eine sehr gute Flächenausnutzung des magnetooptischen Materials gegeben. Aufgrund
der Anordnung der Lichtschaltelemente auf einem einzigen
Chip in Matrixform sind im Vergleich zur Modulausführung
relativ wenig elektrische Anschlüsse erforderlich, was zu
einer Reduzierung von Montagekosten führt. Durch die hohe
Integration der Lichtschaltmaske ist darüberhinaus ein
sehr kompakter Aufbau eines magnetooptischen Druckkopfes
möglich, was den Aufbau kleiner Drucksysteme begünstigt.
Mit dem monolithischen Aufbau einer Lichtschaltmaske und
der damit einhergehenden hohen Integration ist der weitere
Vorteil verbunden, daß zur Belichtung der Lichtschaltmaske
eine quasi Punktlichtquelle, z.B. eine Halogenreflektorlampe eingesetzt werden kann, es ist also nicht erforderlich, eine linienförmige Lichtquelle einzusetzen, was für
den Aufbau relativ kleiner Drucksysteme einen erheblichen
Vorteil darstellt. Ein weiterer wesentlicher Vorteil ist,
daß im Vergleich zur Modulbauweise eine wesentlich höhere
Anzahl von Lichtpunkten pro Lichtpunktreihe erzeugt werden
kann.

Eine weitere vorteilhafte Ausgestaltung des magnetooptischen Druckkopfes nach der Erfindung ist gekennzeichnet
durch eine zwischen dem Abbildungssystem und dem Aufzeichnungsträger angeordnete Optik, die die Lichtpunktreihe im
Maßstab 1:1 seitenrichtig in der Bildebene des Aufzeichnungsträgers abbildet.

Nach einer vorteilhaften weiteren Ausgestaltung der Erfindung besteht die nach dem Abbildungssystem angeordnete Optik aus einer Anzahl zeilenförmig angeordneter zylindrischer Linsen mit konzentrischem Brechungsindexgradienten (Selfoc-Linsen). Durch den Einsatz derartiger Linsen mit einem Abbildungsverhältnis von 1:1 lassen sich die Kosten für einen optischen Druckkopf der genannten Art erheblich vermindern, da es sich bei diesen Linsen um Massenartikel handelt, die preisgünstig sind. Es ist möglich, den Aufzeichnungsträger mit der aus der Lichtaustrittsseite der Lichtleitfasern austretenden Strahlung direkt zu belichten, durch das Zwischenschalten einer die Lichtpunktreihe im Maßstab 1:1 seitenrichtig in die Bildebene des Aufzeichnungsträgers abbildenden Optik, z.B. einer Selfoc-Optik, ist aber der besondere Vorteil verbunden, daß eine berührungslose Belichtung des Aufzeichnungsträgers über einen größeren Abstand erfolgen kann, wodurch die Lichtaustrittsenden der Lichtleitfasern geschont werden (es kann z.B. keine Verschmutzung der Lichtaustrittsenden der Lichtleitfasern durch den Aufzeichnungsträger eintreten).

Mit der Übertragung der von den matrixförmig angeordneten Lichtschaltelementen erzeugten Lichtpunkte über einzelne Lichtleitfasern ist der Vorteil verbunden, daß an der Lichtaustrittsseite der Lichtleitfaseroptik eine äquidistante Lichtpunktreihe gebildet werden kann, die in ihrer Geometrie unabhängig von der Anordnung der Lichtschaltelemente und der durch sie gebildeten Lichtpunkte ist, da die einzelnen Lichtleitfasern in beliebiger Anordnung und beliebigem Abstand zueinander angeordnet werden können.

Die mit der Erfindung erzielten Vorteile bestehen neben den oben genannten Vorteilen insbesondere darin, daß aus dem hinter der Lichtschaltmaske entstehenden Lichtpunktbild durch Einsatz der Lichtleitfaseroptik eine durchgehende Reihe von äquidistanten Lichtpunkten in der Bildebene des Aufzeichnungsträgers darstellbar ist, ohne daß mehrere kostspielige mehrlinsige Objektive eingesetzt werden müssen. Ein weiterer Vorteil ist, daß es nicht erforderlich ist, daß die mit den matrixförmig angeordneten Lichtschaltelementen der Lichtschaltmaske verbundenen Lichtleitfasern an ihrer Lichtaustrittsseite, an welcher die Lichtleitfasern linienförmig nebeneinanderliegen, in einer bestimmten Reihenfolge geordnet sein müssen. Die Reihenfolge der Lichtleitfasern ist beliebig. Eine über die Lichtleitfasern in deren Reihenfolge einlaufende Kenndateninformation wird gemessen und elektronisch in einem Speicher, z.B. einem ROM, abgespeichert; mit Hilfe der gespeicherten Daten ist die richtige Ansteuerung der Lichtschaltmaske immer gewährleistet. Durch dieses Meßverfahren wird die Montage einer Lichtleitfaseroptik sehr vereinfacht.

Ein Ausführungsbeispiel der Erfindung ist in der Zeichnung dargestellt und wird im folgenden näher beschrieben.:

Es zeigen:

Fig. 1 den prinzipiellen Aufbau eines bekannten magnetooptischen Druckkopfes mit magnetooptischen Lichtschaltelementen

Fig. 2 Prinzip eines magnetooptischen Druckkopfes nach der Erfindung.

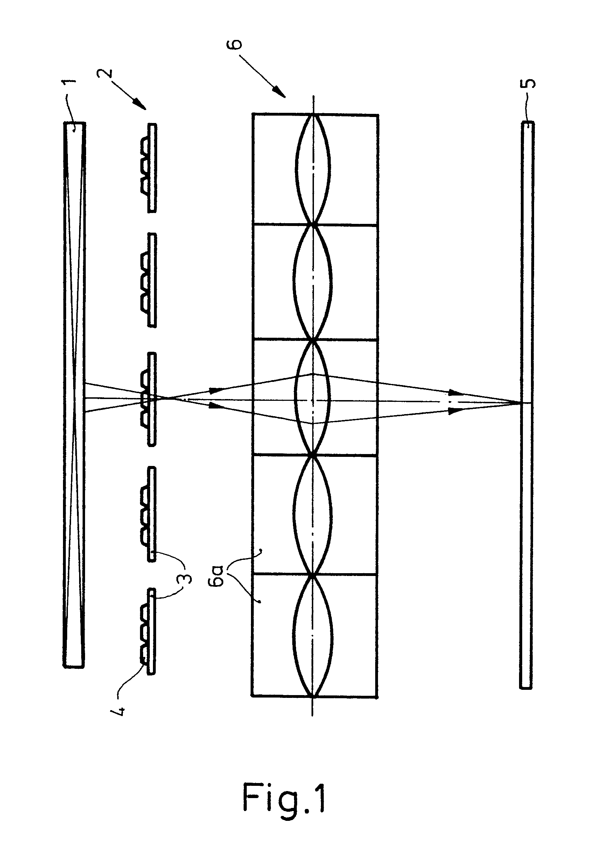

In Figur 1 ist der prinzipielle Aufbau eines bekannten magnetooptischen Druckkopfes dargestellt. Er enthält eine linienförmige Lichtquelle 1, der eine Lichtschaltmaske 2 vorgelagert ist, die aus modulartig aneinandergesetzten Teillichtschaltmasken 3 besteht, aus denen eine Zeile von magntooptischen Lichtschaltelementen 4 gebildet ist. Zwischen dem Aufzeichnungsträger 5 und der Lichtschaltmaske 2 ist ein optisches Abbildungssystem 6 aus mehreren Objektiven 6a zur Abbildung der durch die Lichtschaltelemente 4 erzeugten Bildmuster auf dem Aufzeichnungsträger 5 angeordnet. Durch dieses Abbildungssystem 6 wird in vergrößerter Abbildung für jedes angesteuerte Lichtschaltelement 4 ein entsprechender Bildpunkt auf dem Aufzeichnungsträger 5 erzeugt.

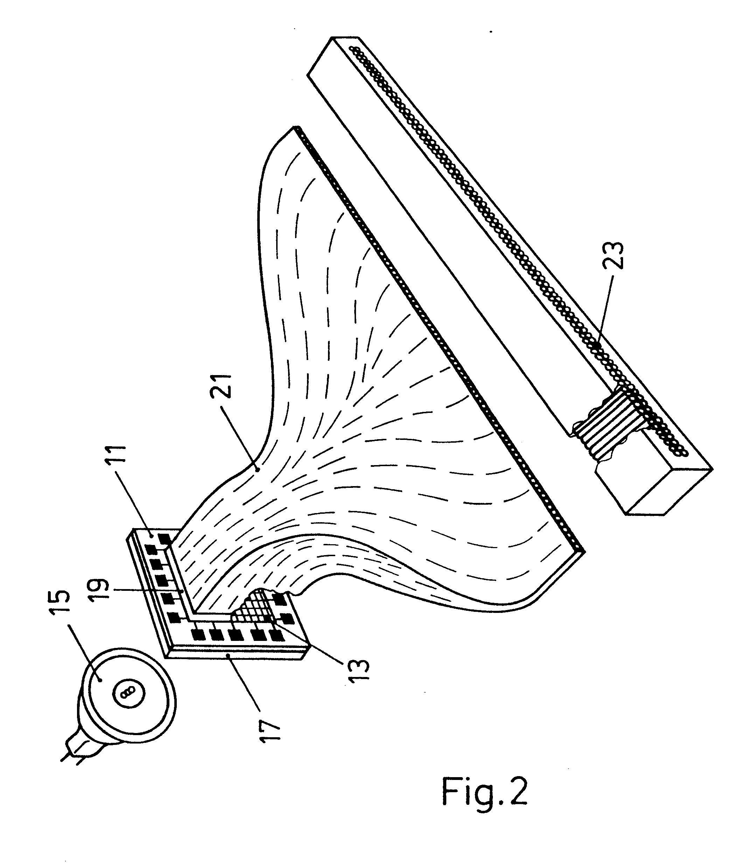

Fig. 2 zeigt einen magnetooptischen Druckkopf nach der Erfindung für einen optischen Drucker. Eine Lichtschaltmaske 11 in Form einer integrierten Matrix von z.B. 64x64 Lichtschaltelementen 13, die durch Strukturieren einer magnetooptischen Schicht, z.B. aus Eisengranat, auf einem einkristallinen Substrat einer Größe von 8x8mm und anschließendes Aufdampfen von Leiterbahnen und Dünnschicht-Widerstandselementen auf der Struktur zur thermomagnetischen Ansteuerung der Lichtschaltelemente hergestellt ist, ist vor einer Lichtquelle 15 mit einem kreisförmig relativ eng begrenzten Lichtaustritt (etwa 10 mm 0), z.B. einer handelsüblichen Halogenreflektorlampe, angeordnet und wird von dieser beleuchtet. An der Lichteintrittsseite vor der Lichtschaltmaske 11 ist eine Polarisationsfolie 17 und an der Lichtaustrittsseite hinter der Lichtschaltmaske 11 ist eine Analysatorfolie 19 angeordnet. Durch diese aus Polarisationsfolie 17 und Analysatorfolie 19 gebildete Polarisationsoptik wird die Drehung der Schwingungsebene für die beiden Zustände der Magnetisierungsrichtung in einen Helligkeitsunterschied (Hell-Dunkel) umgewandelt.

Die Arbeitsweise einer Lichtschaltmaske sowie das thermomagnetische Umschalten der Lichtschaltelemente wurden vorn
bereits beschrieben.

Das in Transmission nach dem thermomagnetischen Schalten
der einzelnen Lichtschaltelemente 13 entstehende Lichtpunktbild aus 64x64 = 4096 Lichtpunkten hinter der Lichtschaltmaske 11 wird über eine Lichtleitfaseroptik 21, deren einzelne Lichtleitfasern die Informationen aus den
einzelnen matrixförmig angeordneten Lichtschaltelementen
13 übernehmen und die an der Lichtaustrittsseite in einer
Linie nebeneinander angeordnet sind, in eine Reihe von
äquidistanten Lichtpunkten überführt. Diese Lichtpunktreihe wird entweder direkt aus der Lichtleitfaseroptik in die
Bildebene eines vor der Lichtleitfaseroptik angeordneten
lichtempfindlichen Aufzeichnungsträgers (nicht dargestellt) oder über eine Optik 23, die die Lichtpunktreihe
im Maßstab 1:1 seitenrichtig abbildet, abgebildet. Eine
derartige Optik kann beispielsweise eine sogenannte Selfoc-Optik sein, wie sie als Abbildungsoptik in Bürokopierern benutzt wird. Eine Selfoc-Optik besteht aus einer
größeren Anzahl von Glaszylindern, in denen ein konzentrischer Brechungsindexgradient vorhanden ist. Durch diesen
Brechungsindexgradienten wird eine lichtfokussierende
Wirkung erzielt, die zur Abbildung der Lichtpunkte ausgenutzt wird. Ein derartiges Abbildungssystem besitzt gegenüber Objektiven mit konventionellen Linsen den Vorteil eines kompakteren Aufbaus, so daß optische Druckköpfe mit
wesentlich geringeren Abmessungen herstellbar sind, und
ist darüberhinaus billiger und leichter montierbar als
konventionelle Systeme.

0177093

PATENTANSPRÜCHE

1. Magnetooptischer Druckkopf mit einer Lichtquelle, einer zwischen dieser und einem lichtempfindlichen Aufzeichnungsträger angeordneten Lichtschaltmaske mit Lichtschaltelementen und mit einem Abbildungssystem zur Abbildung einer Reihe von von den Lichtschaltelementen gebildeten Lichtpunkten auf einem lichtempfindlichen Aufzeichnungsträger, gekennzeichnet durch eine monolithische integrierte Lichtschaltmaske mit matrixförmig auf einem Substrat ausgebildeten Lichtschaltelementen und durch ein Abbildungssystem in Form von einzelnen, fliegend angeordneten Lichtleitfasern, die an ihrem Lichteintrittsende mit den Lichtschaltelementen optisch verbunden sind und deren Lichtaustrittsenden linienförmig nebeneinander in äquidistanten Abständen angeordnet sind.

2. Magnetooptischer Druckkopf nach Anspruch 1, gekennzeichnet durch eine integrierte Lichtschaltmaske mit Lichtschaltelementen, die durch Strukturieren einer auf einem einkristallinen Substrat angebrachten magnetooptischen Schicht gebildet sind, wobei in bekannter Weise auf der Struktur Leiterbahnen und Dünnschichtwiderstandselemente aufgedampft sind.

3. Magnetooptischer Druckkopf nach Anspruch 1, gekennzeichnet durch eine zwischen dem Abbildungssystem und dem Aufzeichnungsträger angeordnete Optik, die die Lichtpunktreihe im Maßstab 1:1 seitenrichtig in der Bildebene des Aufzeichnungsträgers abbildet.

4. Magnetooptischer Druckkopf nach Anspruch 3,
<u>dadurch gekennzeichnet</u>, daß die Optik aus einer Anzahl
zeilenförmig nebeneinander angeordneter zylindrischer
Linsen mit konzentrischem Brechungsindex-Gradienten
(Selfoc-Linsen) besteht.

5. Magnetooptischer Druckkopf nach den Ansprüchen 1 und 2,
<u>gekennzeichnet durch</u> eine Lichtquelle, die eine Lichtaustrittsöffnung hat, die etwa der Größe der zu beleuchtenden
Lichtschaltmaske entspricht.

0177093

Fig.1

0177093

Fig.2